# FASCICULE DE BREVET EUROPEEN

(11) **EP 1 207 637 B1**
(45) Date de publication et mention de la délivrance du brevet: **29.08.2012**
(21) Numéro de dépôt: 01402910.2
(22) Date de dépôt: 13.11.2001
(51) Int. Cl.: H04B 7/26

(54) **PROCÉDÉ D'AUGMENTATION DU DÉBIT DANS UN RÉSEAU DE TÉLÉCOMMUNICATIONS**
VERFAHREN ZUM ERHÖHEN DER DATENRATE IN EINEM TELEKOMMUNIKATIONSNETZ
METHOD TO INCREASE THE DATA RATE IN A TELECOMMUNICATION NETWORK

(30) Priorité: 17.11.2000 FR 0014887
(43) Date de publication de la demande: 22.05.2002
(73) Titulaire: Thales, 75008 Paris (FR)
(72) Inventeur: Deltour, Bruno, Thales, Intellectual Property, 94117 Arcueil Cedex (FR); Michalon, Gilles, Thales, Intellectual Property, 94117 Arcueil Cedex (FR)
(74) Mandataire: Dudouit, Isabelle

(56) Documents cités:
- EP-A2- 0 687 078
- WO-A-00/18041
- WO-A-91/08629
- WO-A1-97/19525
- US-A- 4 646 345
- US-A- 4 750 169
- US-A- 5 521 925
- GANGSHENG WANG ET AL: "SEARCHING FOR OPTIMAL FRAME PATTERNS IN AN INTEGRATED TDMA COMMUNICATION SYSTEM USING MEAN FIELD ANNEALING" IEEE TRANSACTIONS ON NEURAL NETWORKS,US,IEEE INC, NEW YORK, vol. 9, no. 6, 1 novembre 1998 (1998-11-01), pages 1292-1299, XP000788886 ISSN: 1045-9227

## Description

La présente invention se rapporte à un procédé d'augmentation du débit dans un réseau de télécommunications à transmission de données et de phonie.

Dans les transmissions en radio VHF à faible largeur de bande (par exemple de 25 kHz), le canal radio est partagé temporellement entre des sessions de transmission de phonie (communications à la voix entre les différents opérateurs), et des sessions de transmission de données (messages opérationnels, messages de position, fichiers de données, ...).

Actuellement, les équipements VHF ne permettent pas de transmettre simultanément la phonie et les données: les transmissions s'effectuent l'une après l'autre.

Pour apporter aux équipements une protection contre les contre-mesures électroniques, le mode de fonctionnement en évasion de fréquence (EVF) est un des moyens possibles.

Le fonctionnement en évasion de fréquence consiste à n'utiliser une fréquence que pendant un temps déterminé (palier). Actuellement, ce temps est de l'ordre de quelques millisecondes pour les équipements VHF. La transmission des informations s'effectue sur n paliers, l'ordre des fréquences utilisées étant tiré de façon aléatoire.

Une station particulière, appelée maître du réseau, peut assurer la synchronisation de l'ensemble du réseau.

Les transmissions s'effectuent généralement en conférence, ce qui signifie que toute émission de l'un des postes du réseau est reçue par l'ensemble des autres postes. Ces derniers ne peuvent alors pas passer en émission tant que la transmission précédente n'est pas finie (fonctionnement à l'alternat).

En raison du mode de fonctionnement à l'alternat, tout poste radio désirant passer en émission (phonie ou données) doit d'abord attendre la libération du canal VHF avant de passer en émission. Des règles de priorité peuvent éventuellement être définies afin de faire passer une émission plus prioritaire que la transmission en cours.

Lorsque le réseau effectue à la fois des transmissions de phonie et des transmissions de données, celles-ci doivent se faire les unes après les autres. Cependant, cela crée de nombreuses difficultés.

Généralement, les transmissions de données sont effectuées par des calculateurs reliés aux postes radios; ces calculateurs ne savent pas si le canal est utilisé ou non par la phonie lorsqu'ils font une demande d'émission de données.

Si une transmission de phonie est en cours, la transmission de données ne pourra se faire qu'au relâché d'alternat par l'opérateur. Son interlocuteur devra alors attendre la fin de la transmission des données avant de pouvoir reprendre la parole. Une autre possibilité est la mise en attente de la transmission de données ; elle ne se fera qu'après une temporisation suivant le dernier alternat phonie.

Si la phonie est prioritaire sur les transmissions de données, la prise d'alternat par la phonie va interrompre une transmission de données en cours. La fin du message (ou l'intégralité de celui-ci) sera retransmise après la fin de l'alternat phonie, ce qui a pour conséquence d'augmenter le temps d'acheminement global des données.

On voit avec le fonctionnement ci-dessus que dès qu'on utilise un système émettant souvent des données, les communications phonie vont être perturbées. D'autre part, les transmissions de données vont également être perturbées par ta phonie.

Il en résulte que les transmissions de données doivent être limitées à environ 20 % d'occupation du canal si l'on désire pouvoir prendre le canal pour des alternats phonie dans un délai raisonnable. Or, ces dernières années, les transmissions de données prennent une part de plus en plus importante.

Une autre possibilité est de disposer de deux postes radio VHF travaillant sur deux canaux différents, l'un pour la phonie et l'autre pour les transmissions de données.

Le document WO 91 08629 concerne un système de communication utilisant un noeud de communication couplé au réseau public PSTN.

Le document de Gangsheng Wang et al intitulé « Searching for ooptimal frame patterns in an integrated TDMA communication system using mean 35 field annealing » IEEE transactions on neural network, US, IEEE,INC New York, vol.9,n°6, 1 novembre 1998, pages 1292-1299, XP0007888868 ISSN 1045-9227 décrit un procédé dans lequel la trame TDMA est émise par le même émetteur.

Le document WO 00/18041 concerne une méthode et un système permettant une communication entre les noeuds d'un réseau. Le réseau comprend des noeuds qui diffusent et reçoivent des paquets de données circulant dans un canal radio. Les communications sont distribuées sur plusieurs canaux. La voix et d'autres données sont transmises sur des canaux de données, alors que les informations relatives à la disponibilité des canaux sont transmises au niveau d'un canal de contrôle.

La présente invention a pour objet un procédé permettant d'augmenter le débit d'informations (données et/ou phonie) dans un réseau à relativement faible bande (quelques dizaines de kHz par exemple), tout en évitant de façon efficace les risques de collision de demandes d'émission simultanées ou rapprochées.

L'invention concerne un procédé d'augmentation du débit dans un réseau de télécommunications à faible largeur de bande comportant plusieurs postes (A, B, ...) à transmission de données et de phonie caractérisé en ce que les communications sont effectuées en conférence et à l'alternat, toute émission de l'un des postes du réseau étant reçue par l'ensemble des autres postes, chacun des postes du réseau a les mêmes droits pour intervenir sur un sous-canal de synchronisation et en ce qu'il consiste à multiplexer dans le temps les sous-canaux de données (D1, D2, ...) et de phonie (P1, P2, ...) avec un sous-canal de synchronisation (S) pour former une trame se composant d'une alternance de créneaux de données, de phonie et de synchronisation, chaque créneau de données, phonie, synchronisation comporte une première partie réservée à la synchronisation sur un signal de synchronisation émis par l'un des postes du réseau qui est en émission, le reste de la durée du créneau est consacré à l'émission des trois sous-canaux précités..

Le procédé utilise, par exemple, des transmissions radios VHF.

Le sous-canal de synchronisation peut être utilisé pour des tâches relatives aux relations entre au moins deux postes du réseau.

Les tâches comportent, par exemple, au moins l'une des tâches suivantes : demande d'émission prioritaire formulée par un poste, alerte signalée par un poste, message « flash », demande de répétition d'un message, ordres émis par un poste, reconfiguration du réseau.

Lorsque l'un des sous-canaux de données ou de phonie est inoccupé, il est, par exemple, utilisé pour la transmission des informations circulant dans l'autre sous-canal.

Le procédé peut mettre en oeuvre une procédure d'anti-collision lorsqu'il y a plusieurs demandes simultanées ou quasi-simultanées d'utilisation d'un sous-canal de données ou de phonie.

Le processus d'anti-collision consiste, par exemple, à attribuer à chaque poste demandeur un nombre aléatoire, celui ayant le plus petit obtenant le droit d'émettre le premier, et les autres obtenant le droit d'émettre dans l'ordre correspondant à l'ordre croissant des nombres aléatoires qui leur ont été attribués.

Le processus d'anti-collision obéit, par exemple, à une règle de priorité tournante.

La présente invention sera mieux comprise à la lecture de la description détaillée d'un mode de mise en oeuvre, pris à titre d'exemple non limitatif et illustré par le dessin annexé, sur lequel :
- la figure 1 est un schéma simplifié d'un exemple d'une trame du signal multiplexé temporellement conformément au procédé de l'invention ;
- la figure 2 est un schéma simplifié illustrant le fonctionnement de l'alternat en transmission de phonie, à l'aide de la représentation d'une trame telle que celle de la figure 1 ;
- la figure 3 est un schéma illustrant la façon dont le procédé de l'invention évite une collision de demandes rapprochées d'émission faites par deux postes d'un réseau ;
- la figure 4 est un schéma similaire à celui de la figure 2, mais pour la transmission de données ; et
- les figures 5 et 6 sont des schémas illustrant, conformément à l'invention, la récupération du sous-canal phonie utilisé par les données après la fin de la transmission de données, et en cours de transmission de données, respectivement.

La présente invention est décrite ci-dessous en référence à un réseau de télécommunications en radio VHF pour la transmission simultanée de données (données quelconques relatives à des mesures, des images, ...) et de phonie, mais il est bien entendu qu'elle n'est pas limitée à cette application, et qu'elle peut aussi bien être mise en oeuvre lorsque l'on a à transmettre uniquement des données ou uniquement de la phonie, que ce soit en VHF ou à d'autres gammes de fréquences.

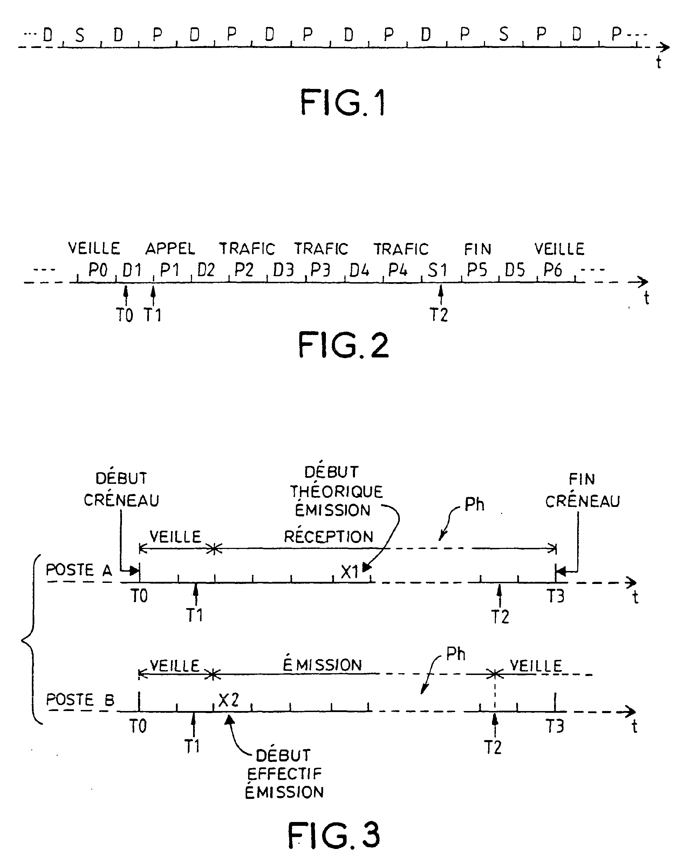

On va expliquer en référence à la figure 1, une caractéristique essentielle du procédé de l'invention. Selon ce procédé, on subdivise un canal de transmission VHF en trois sous-canaux distincts : un sous-canal pour la transmission de la phonie P, un sous-canal pour la transmission des données D et un sous-canal pour assurer, en particulier, la synchronisation S du réseau utilisant ce canal VHF. Ce réseau comprend, par exemple quelques dizaines de postes émetteurs-récepteurs. L'un de ces postes peut être le poste maître du réseau, et il est alors le superviseur du sous-canal de synchronisation. Toutefois, le réseau mettant en oeuvre le procédé de l'invention ne comporte pas nécessairement de poste maître. Dans le cas où il n'y a pas de tel poste maître, chacun des postes du réseau a les mêmes droits pour intervenir sur ce sous-canal de synchronisation.

Selon le procédé de l'invention, les trois sous-canaux précités P, D, S sont multiplexés temporellement. La trame temporelle ainsi constituée comporte, au sein d'une période, plusieurs alternances de créneaux (« slots » en anglais) de sous-canaux Pet D et, en général, un seul créneau de sous-canal S. Dans l'exemple représenté, tous les créneaux ont la même durée mais cela n'est pas nécessairement le cas. Dans l'exemple de la figure 1, chaque période comporte cinq créneaux P alternant avec cinq créneaux D et un seul créneau S, mais il est bien entendu que ces nombres peuvent être différents, en particulier en fonction du rapport des charges attendues ou prévisibles en phonie et en transmission de données. La durée de chacun de ces créneaux P, D et S est fonction, en particulier, de la largeur de bande du canal VHF et de la charge prévisible de transmission phonie et données. A titre d'exemple, pour une largeur de bande de 25 kHz et un réseau de quelques dizaines de postes émetteurs-récepteurs, la durée d'un créneau peut être de quelques dizaines de millisecondes.

Le sous-canal de synchronisation sert non seulement à la synchronisation commune de tous les postes du réseau, mais peut également être utilisé pour différentes tâches relatives aux relations entre au moins deux postes du réseau. Par exemple, ces tâches peuvent être l'une des tâches suivantes : demande d'émission prioritaire formulée par un poste, alerte signalée par un poste, message « flash », demande de répétition d'un message, ordres émis par le poste maître, reconfiguration du réseau, etc. Selon un exemple de mise en oeuvre, dans le cas de risques d'interception et/ou de brouillages, on a recours à l'agilité de fréquence. Dans chaque créneau, données, phonie et synchronisation, le poste maître commande un ou, de préférence, plusieurs sauts de fréquence aléatoire produits de façon connue en soi. Pour des créneaux d'une durée de quelques dizaines de millisecondes, le nombre de sauts de fréquence dans chaque créneau peut être par exemple de 20 à 30.

Selon une caractéristique de l'invention, chaque créneau de données, phonie et synchronisation comporte une première partie (qui peut, par exemple, durer quelques dizaines de pourcents de la durée totale du créneau) réservée à la synchronisation sur un signal de synchronisation émis par l'un des postes du réseau, qui est en émission, ou bien par le poste maître, le reste de la durée du créneau est consacré à l'émission d'un signal utile, s'il existe (signal P, D ou S). La synchronisation émise sur le sous-canal P ou D permet aux postes de se resynchroniser finement sur l'émetteur de la phonie P ou des données D en question. La synchronisation émise sur le sous-canal S permet de garantir la cohérence du réseau en resynchronisant chaque station sur le maître du réseau.

On a représenté en figure 2, un exemple d'un tronçon de signal VHF lors de l'émission d'un court message sur le canal phonie. A l'instant TO, se situant après un créneau PO libre (veille de phonie) et au début d'un créneau D, référencé D1, l'opérateur d'un poste active le commutateur d'alternat de ce poste. Etant donné qu'à l'instant TO un créneau de données est entamé, le poste en question attend le prochain créneau de phonie P1 qui survient à l'instant T1. On suppose qu'à cet instant aucun autre poste n'émet en phonie. Le poste en question peut donc lancer un appel dans la partie utile du créneau P1 pour pouvoir émettre en phonie aussitôt après, dans les créneaux P2 à P4 (qui alternent avec les créneaux D2 à D4). Un créneau S1 de synchronisation suit le créneau P4. On suppose que ledit opérateur, ayant fini de transmettre ce qu'il avait à dire, relâche l'alternat de son poste à un instant T2, pendant le créneau S1. Pendant le créneau P5, qui suit immédiatement S1, le signal de fin d'alternat est émis, et tous les postes du réseau repassent à l'état de veille en phonie, dans l'attente de la signalisation de la prochaine activation d'alternat. On notera que chaque poste du réseau fonctionnant en récepteur (c'est-à-dire tous les postes sauf celui où a été activé l'alternat) se recale sur les signaux de synchronisation émis au début de P1. Cette synchronisation est mémorisée dans chacun de ces postes récepteurs et reprise à chaque début de créneau de communication du sous-canal phonie, et ce, tant que l'opérateur n'a pas relâché l'alternat. Dès réception du créneau de fin d'alternat phonie (P5 en figure 2), tous les postes du réseau repassent en veille d'alternat sur le sous-canal phonie et reprennent sur ce sous-canal la synchronisation émise par le poste maître du réseau.

Afin d'éviter le plus grand nombre possible de collisions de prise d'alternat (c'est-à-dire pour éviter les effets de blocage qui seraient dus à l'arrivée simultanée ou quasi-simultanée de demandes d'émission en phonie, en particulier pendant l'occupation de ce sous-canal par l'un des postes), le procédé de l'invention prévoit une procédure d'anti-collision. Cette procédure consiste, par exemple, à faire tirer un nombre aléatoire X par chaque poste désirant passer en émission en phonie, ce nombre X correspondant à un laps de temps s'écoulant à partir de l'instant du tirage de ce nombre. L'émission de chacun des postes en question ne sera possible, au plus tôt, qu'après l'écoulement du laps de temps correspondant. On a représenté en figure 3 un exemple simplifié de mise en oeuvre de ce processus. Soient deux postes A et B demandant simultanément la permission d'émettre. Leurs demandes se produisent à un instant T1, peu après le début T0 d'un créneau phonie Ph, qui a été dédoublé en figure 3 pour la clarté des explications. On suppose qu'entre les instants T0 et T1 aucun poste du réseau n'émet en phonie, et donc que cette partie de créneau est à l'état de veille de phonie. Sur la figure 3, on a subdivisé le créneau Ph en plusieurs paliers (dont chacun correspond à une fréquence différente d'émission). On suppose que le poste A se voit attribuer le nombre X1, correspondant à cinq paliers, et que le poste B se fait attribuer le nombre X2 correspondant à un seul palier. Par conséquent, le poste B peut émettre dès le premier palier suivant T1. L'émission du poste B dure jusqu'à un instant T2 situé, pour l'exemple représenté, près de la fin du créneau Ph. Puisque X1 > X2, le poste A n'a pas le droit d'émettre tant que le poste B émet, c'est-à-dire pas avant l'instant T2. Bien entendu, si l'émission du poste B dure au-delà de la fin du créneau Ph, elle se poursuivra sur le(s) prochain(s) palier(s) du(des) créneau(x) de phonie Ph+1, Ph+2, etc. Il est également bien entendu que si, à l'instant T1, ou à un instant situé entre T1 et le 5^{ème} palier, un troisième poste C demande l'autorisation d'émettre, et si le nombre X3 qui lui est attribué est tel que le début de son émission théorique se situe avant celui du poste A (avant le 5^{ème} palier du créneau Ph), il pourra émettre avant le poste A, dès la fin de l'émission du poste B. Il peut également se produire que le début théorique de l'émission du poste C coïncide avec celui du poste A. Dans un tel cas, selon un autre aspect du procédé de l'invention, en fonction, notamment du nombre de postes du réseau, soit un autre tirage de nombres aléatoires est fait pour les postes A et C, soit on prévoit, lors de la conception du réseau, ou même en régime opérationnel, une priorité hiérarchisée des différents postes.

Si le nombre X1 était nettement plus grand que X2, et que de nombreuses demandes d'émission d'autres postes se produisaient entre T1 et le début d'émission théorique du poste A, et si les nombres aléatoires attribués à ces autres postes étaient tels que leurs débuts théoriques d'émission respectifs se situaient avant celui du poste A, l'émission de ce dernier pourrait être fortement retardée. Pour éviter une telle situation, le procédé de l'invention prévoit d'accorder la priorité au poste A par rapport à tous les autres postes ayant émis une demande d'autorisation après lui s'il n'a pu obtenir l'autorisation d'émettre au bout d'un temps déterminé après le début théorique déterminé par X1, et donc de reporter les autorisations respectives des autres postes après la fin de l'émission du poste A (qui, lui-même attend la fin des émissions des postes qui avaient priorité sur lui).

Selon une variante du procédé de l'invention, on accorde une priorité tournante aux postes désirant émettre, c'est-à-dire que toutes les demandes en attente sont examinées selon un ordre pré-établi, et l'autorisation leur est accordée selon cet ordre dès que le poste en train d'émettre a terminé sa session. Toutefois, cet ordre peut être décalé si un poste ayant la priorité absolue désire émettre, l'émission du poste en train d'émettre pouvant même être interrompue. Cette demande du poste à priorité absolue est émise sur le canal de synchronisation et aussitôt prise en compte dès le premier créneau de phonie suivant le créneau de synchronisation.

Bien entendu, d'autres procédés d'anti-collision de demandes d'émission peuvent être mis en oeuvre.

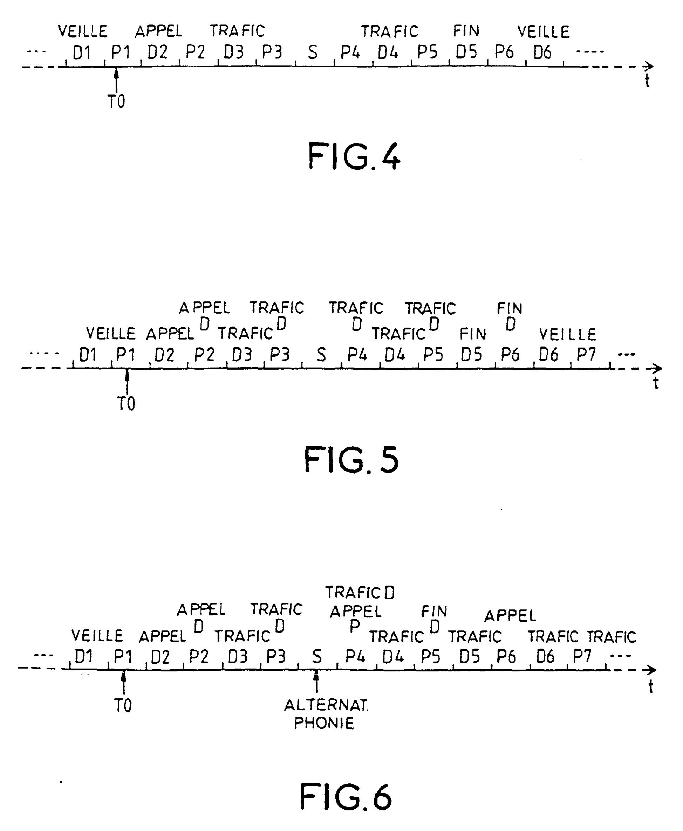

On a représenté en figure 4 un exemple de tronçon de trame de réseau conforme à l'invention, qui se rapporte plus particulièrement à une procédure d'émission de données. On suppose qu'il n'y a aucun trafic sur le sous-canal de données au début de ce tronçon de trame. Le premier créneau de données D1 est alors à l'état de veille, et tous les récepteurs des postes du réseau sont à l'écoute du sous-canal de données. On suppose qu'à un instant T0, situé au début du créneau de phonie P1, arrivant immédiatement après D1, l'un des postes du réseau (Poste A par exemple) envoie une demande d'émission. Cette demande est prise en compte sur le créneau de données D2, arrivant immédiatement après P1. L'appel est donc effectivement passé au début de D2, et, puisqu'aucun autre poste n'émet de demande de permission d'émettre des données, le poste A peut aussitôt émettre ses données, en commençant dans D2. On suppose que le poste A doit émettre des données pendant un laps de temps supérieur à la durée de deux créneaux. Il émet donc ses données pendant D3, D4 et pendant une partie de D5. A la fin de cette émission, le poste A envoie son signal de fin d'émission pendant D5. Dès le créneau de données suivant, D6, le sous-canal de données passe à l'état de veille. Bien entendu, les mêmes procédés d'anti-collision que ceux décrits ci-dessus en référence au sous-canal de phonie sont applicables au sous-canal de données.

Le sous-canal de données est utilisé pour transmettre des messages ou des fichiers à différents débits. De la même façon que pour le sous-canal phonie, plus le débit utile est faible, plus la résistance au brouillage est élevée. Il est également possible de mettre en oeuvre un codage des données, ce codage pouvant être de tout type connu. Les données transmises sur le sous-canal de données sont indépendantes de la phonie. Lorsqu'un poste désirant émettre des données lance un signal de demande d'émission, le(s) poste(s) récepteur(s) concerné(s) se recalent sur l'émission des données dès la réception du créneau d'appel (créneau D2 en figure 4). Cette synchronisation est mémorisée et reprise à chaque début de créneau de données (D3, D4, ... en figure 4), tant que l'émission de données se poursuit. A la réception du signal de fin d'émission de données (créneau D5 en figure 5), tous les postes du réseau repassent à l'état de veille sur le sous-canal de données et reprennent sur ce sous-canal de données la synchronisation reçue du poste maître du réseau.

Le sous-canal de synchronisation est utilisé par le poste maître du réseau pour maintenir la synchronisation de l'ensemble des postes du réseau, et il émet à cet effet, au début de chaque créneau de synchronisation un motif de synchronisation (par exemple une succession de signaux à différentes fréquences, comportant chacun un code de synchronisation).

Cette synchronisation des postes du réseau leur permet de se mettre en état de recevoir les données très rapidement (typiquement en moins de 500 ms) aussi bien sur le sous-canal données que sur le sous-canal phonie.

En outre, ce sous-canal de synchronisation sert, selon l'invention, à la transmission de différentes informations générales ou spécialisées, sur la deuxième partie de chaque créneau de synchronisation, après la première partie qui est réservée aux signaux de synchronisation proprements dits. Ce sous-canal peut, à cet effet, être utilisé aussi bien par le poste maître que par tous les autres postes du réseau.

Ces informations comportent, en particulier, l'émission d'un message d'alerte (alerte générale ou bien vers le poste maître et/ou certains postes plus concernés par cette alerte) d'un message « flash » (informations particulièrement intéressantes pour l'ensemble des postes ou pour une partie d'entre eux), des demandes particulières (préemption du sous-canal phonie ou données). Ces informations sont émises sans perturber le fonctionnement ni du sous-canal données ni du sous-canal phonie. Le poste maître, ou même un des postes du réseau peut également transmettre sur le sous-canal de synchronisation des messages particuliers tels que : messages d'intérêt général (fin d'opération, changement de fréquence d'émission, changement de codage...) ou de reconfiguration du réseau (changement dans les trames du nombre de créneaux de phonie par rapport au nombre de créneaux de données, durée des créneaux, ...) ou d'autorisation d'émission en phonie sur au moins une partie des créneaux de phonie. Pour accélérer la procédure d'émission d'informations sur le sous-canal de synchronisation, on peut attribuer à chaque catégorie d'informations et/ou à chaque information un numéro d'identification, qui est très rapide à transmettre.

On a représenté en figure 5 un tronçon de trame montrant un exemple de processus de récupération du canal phonie par les données. On suppose que juste avant l'engagement de ce processus, les sous-canaux données et phonie sont en veille : les créneaux D1 et P1 indiquent cet état de veille. A un instant T0, situé au début de P1, un poste A du réseau signale qu'il a à transmettre un grand nombre de données de façon urgente, et que, par conséquent, il souhaite utiliser à la fois le sous-canal données et le sous-canal phonie, ce qui lui est accordé aussitôt, puisque ces deux sous-canaux sont à l'état de veille (si d'autres postes étaient en train de transmettre des données et/ou de la phonie, et si l'émission du poste A était jugée prioritaire par le poste maître, ce dernier ordonnerait à tous les autres postes actifs de suspendre leurs émissions respectives pour pouvoir donner la priorité au poste A). Le poste A entame donc son processus dès le créneau D2 sur lequel il lance son appel pour utiliser en totalité le sous-canal de données, puis il lance un appel sur le créneau P2 pour pouvoir utiliser le sous-canal phonie, et commence à émettre ses données sur D3, puis P3, D4, P4 ... On suppose que ses dernières données sont transmises sur D5. Il émet alors un signal de fin d'émission sur D5, puis sur P6 (qui suit immédiatement D5), afin de libérer les deux sous-canaux correspondants. Il en résulte la mise en veille de ces deux sous-canaux, et ce, dès D6 et P7.

La figure 6 se rapporte à une variante du cas illustré de façon simplifiée en figure 5, à savoir que, pendant l'émission de données par le poste A sur les deux sous-canaux données et phonie, se produit une demande d'émission en phonie par un poste B qui ne peut attendre la fin de l'émission de données sur le sous-canal phonie par le poste A. Ce poste A envoie une demande d'émission d'un grand lot de données pendant le créneau P1, à l'instant T0. On suppose qu'alors aucun autre poste n'émet ni de données, ni de phonie. Le poste A peut donc envoyer sur le créneau D2 un appel pour l'occupation du sous-canal de données, puis sur le créneau P2 un appel pour l'occupation du sous-canal de phonie. Aussitôt après P2, le poste A commence à envoyer ses données sur les deux sous-canaux. On suppose que pendant le créneau de synchronisation S qui suit immédiatement P3, un poste B émet un signal de demande d'émission en phonie (activation de son alternat). Les créneaux de données émis sur le sous-canal phonie ont une structure particulière permettant de veiller les demandes d'alternat phonie (intervalles de temps réservés à l'écoute de demandes d'alternat phonie). La demande du poste B est émise dans cet intervalle de temps du créneau P4. Le sous-canal de synchronisation n'est pas utilisé dans le cas présent (en théorie, il pourrait l'être, mais le temps de réaction serait plus long pour donner suite à la demande du poste B).

La demande du poste B est émise afin que le poste A libère le sous-canal phonie. Pendant le créneau D4, le poste A émet normalement la suite de ses données, puis pendant le créneau P5, le poste A termine l'utilisation du sous-canal phonie pour la transmission de données. En D5, le poste A continue normalement l'émission de données, puis en P6, le poste B passe son appel pour l'émission de phonie. A partir de D6, le poste A continue l'émission de donnés sur le seul sous-canal de données, et à partir de P7, le poste B utilise le sous-canal de phonie pour émettre de la phonie. Bien entendu, un processus similaire serait mis en oeuvre si un poste utilisait les deux sous-canaux pur émettre de la phonie.

## Revendications

1. Procédé d'augmentation du débit dans un réseau de télécommunications à faible largeur de bande comportant plusieurs postes (A, B, ...) à transmission de données et de phonie **caractérisé en ce que** les communications sont effectuées en conférence et à l'alternat, toute émission de l'un des postes du réseau étant reçue par l'ensemble des autres postes, chacun des postes du réseau a les mêmes droits pour intervenir sur un sous-canal de synchronisation et **en ce qu'**il consiste à multiplexer dans le temps les sous-canaux de données (D1, D2, ...) et de phonie (P1, P2, ...) avec un sous-canal de synchronisation (S) pour former une trame se composant d'une alternance de créneaux de données, de phonie et de synchronisation, chaque créneau de données, phonie, synchronisation comporte une première partie réservée à la synchronisation sur un signal de synchronisation émis par l'un des postes du réseau qui est en émission, le reste de la durée du créneau est consacré à l'émission des trois sous-canaux précités..

2. Procédé selon la revendication 1, **caractérisé en ce que** l'on utilise des transmissions radios VHF.

3. Procédé selon la revendication 1, **caractérisé par le fait que** le sous-canal de synchronisation est utilisé pour des tâches relatives aux relations entre au moins deux postes du réseau.

4. Procédé selon la revendication 3, **caractérisé par le fait que** les tâches comportent au moins l'une des tâches suivantes : demande d'émission prioritaire formulée par un poste, alerte signalée par un poste, message « flash », demande de répétition d'un message, ordres émis par un poste, reconfiguration du réseau.

5. Procédé selon l'une des revendications précédentes, **caractérisé par le fait que** lorsque l'un des sous-canaux de données ou de phonie est inoccupé, il est utilisé pour la transmission des informations circulant dans l'autre sous-canal.

6. Procédé selon l'une des revendications précédentes, **caractérisé par le fait qu'**il met en oeuvre une procédure d'anti-collision lorsqu'il y a plusieurs demandes simultanées ou quasi-simultanées d'utilisation d'un sous-canal de données ou de phonie.

7. Procédé selon la revendication 6, **caractérisé par le fait que** le processus d'anti-collision consiste à attribuer à chaque poste demandeur un nombre aléatoire, celui ayant le plus petit obtenant le droit d'émettre le premier, et les autres obtenant le droit d'émettre dans l'ordre correspondant à l'ordre croissant des nombres aléatoires qui leur ont été attribués.

8. Procédé selon les revendications 6 ou 7, **caractérisé par le fait que** le processus d'anti-collision obéit à une règle de priorité tournante.

9. Procédé selon l'une des revendications 6 à 8, **caractérisé par le fait que** lorsqu'un premier poste utilise simultanément les deux sous-canaux de données et de phonie, et qu'un autre poste requiert l'utilisation de l'un de ces sous-canaux, le premier poste libère le sous-canal requis.

## Claims

1. A method for increasing the data rate in a low bandwidth telecommunications network comprising a plurality of stations (A, B, ...) for data and telephony transmission, charaterized in that the communications are carried out by conferencing and by intercom, all emissions from one of the stations of the network being received by all of the other stations, each of the stations of the network having the same rights to intervene on a synchronization sub-channel, and in that it consists in time multiplexing the data (D1, D2, ...) and telephony (P1, P2, ...) sub-channels with a synchronization sub-channel (S) so as to form a frame that consists in an alternation of data, telephony and synchronization time slots, each data, telephony and synchronization time slot including a first part that is reserved for synchronization on a synchronization signal that is emitted by one of the stations of the network that is emitting, the remainder of the duration of the time slot is dedicated to the emission of the aforementioned three sub-channels.

2. The method according to claim 1, charaterized in that VHF radio transmissions are used.

3. The method according to claim 1, charaterized in that the synchronization sub-channel is used for tasks that relate to the relationships between at least two stations of the network.

4. The method according to claim 3, charaterized in that the tasks comprise at least one of the following tasks: a priority emission request formulated by a station, an alert notified by a station, a "flash" message, a request to repeat a message, the emission of orders by a station and the reconfiguration of the network.

5. The method according to any one of the preceding claims, charaterized in that when one of the data or telephony sub-channels is unoccupied it is used to transmit information circulating in the other sub-channel.

6. The method according to any one of the preceding claims, charaterized in that it implements an anti-collision procedure when there is a plurality of simultaneous or quasisimultaneous requests to use a data or telephony sub-channel.

7. The method according to claim 6, charaterized in that the anti-collision procedure consists in assigning a random number to each requesting station, the station with the lowest number obtaining the right to emit first and the other stations obtaining the right to emit in the order that corresponds to the ascending order of the random numbers that they have been assigned.

8. The method according to claim 6 or 7, charaterized in that the anti-collision procedure is governed by a circulating rule of priority.

9. The method according to any one of claims 6 to 8, charaterized in that, when a first station simultaneously uses the two data and telephony sub-channels and another station requires the use of one of its sub-channels, the first station releases the required sub-channel.

## Patentansprüche

1. Verfahren zum Erhöhen der Datenrate in einem Telekommunikationsnetz mit geringer Bandbreite, das mehrere Daten- und Telefonie-Übertragungsstationen (A, B, ...) umfasst, **dadurch gekennzeichnet, dass** die Kommunikationen im Konferenzmodus oder im Intercom-Modus erfolgen, wobei jede Sendung von einer der Stationen des Netzwerks von allen anderen Stationen empfangen wird, wobei jede der Stationen des Netzwerks dieselben Rechte hat, einen Synchronisationsunterkanal zu benutzen, und dadurch, dass es darin besteht, Datenunterkanäle (D1, D2, ...) und Telefonieunterkanäle (P1, P2, ...) mit einem Synchronisationskanal (S) zu zeitmultiplexen, um einen Frame zu bilden, der sich aus abwechselnden Daten-, Telefonie- und Synchronisationszeitschlitzen zusammensetzt, wobei jeder Daten-, Telefonie- und Synchronisationszeitschlitz einen ersten Teil aufweist, der für die Synchronisation auf einem Synchronisationssignal reserviert ist, das von einer der Stationen des Netzwerks gesendet wird, das gerade sendet, wobei der Rest der Dauer des Zeitschlitzes zum Senden der oben erwähnten drei Unterkanäle dediziert ist.

2. Verfahren nach Anspruch 1, **dadurch gekennzeichnet, dass** VHF-Funksendungen verwendet werden.

3. Verfahren nach Anspruch 1, **dadurch gekennzeichnet, dass** der Synchronisationsunterkanal für Aufgaben in Bezug auf Beziehungen zwischen wenigstens zwei Stationen des Netzwerks verwendet wird.

4. Verfahren nach Anspruch 3, **dadurch gekennzeichnet, dass** die Aufgaben wenigstens eine der folgenden Aufgaben beinhalten: Prioritätssendeanforderungen von einer Station, Alarme von einer Station angegeben, "Flash"-Nachrichten, Nachrichtenwiederholungsanforderungen, von einer Station gesendete Aufträge, Umkonfiguration des Netzwerks.

5. Verfahren nach einem der vorherigen Ansprüche, **dadurch gekennzeichnet, dass**, wenn einer der Daten- oder Telefonieunterkanäle nicht belegt ist, er für die Übertragung von Informationen verwendet wird, die in dem anderen Unterkanal zirkulieren.

6. Verfahren nach einem der vorherigen Ansprüche, **dadurch gekennzeichnet, dass** es eine Antikollisionsprozedur ausführt, wenn es mehrere gleichzeitige oder quasigleichzeitige Anforderungen zur Nutzung eines Daten- oder Telefonieunterkanals gibt.

7. Verfahren nach Anspruch 6, **dadurch gekennzeichnet, dass** die Antikollisionsprozedur darin besteht, jeder Anforderungsstation eine zufällige Zahl zuzuweisen, wobei die Station mit der kleinsten Zahl das Recht erhält, zuerst zu senden, und die anderen das Recht erhalten, in der Reihenfolge zu senden, die der aufsteigenden Reihenfolge der zufälligen Zahlen entspricht, die ihnen zugewiesen wurden.

8. Verfahren nach Anspruch 6 oder 7, **dadurch gekennzeichnet, dass** die Antikollisionsprozedur nach einer Regel der umlaufenden Priorität abläuft.

9. Verfahren nach einem der Ansprüche 6 bis 8, **dadurch gekennzeichnet, dass**, wenn eine erste Station gleichzeitig die beiden Daten- und Telefoniekanäle benutzt und eine andere Station die Benutzung von einem ihrer Unterkanäle anfordert, die erste Station den benötigten Unterkanal freigibt.
